Europäisches Patentamt

European Patent Office

Office européen des brevets

(11) Publication number: **0 562 152 A1**

## EUROPEAN PATENT APPLICATION

(21) Application number: **92107167.6**

(22) Date of filing: **27.04.92**

(51) Int. Cl.5: **G11B 5/64**

(30) Priority: **27.03.92 JP 70911/92**

(43) Date of publication of application:
**29.09.93 Bulletin 93/39**

(84) Designated Contracting States:
**DE FR GB**

(71) Applicant: **NKK CORPORATION**
**1-2 Marunouchi 1-chome, Chiyoda-ku**
**Tokyo(JP)**

(72) Inventor: **Sakiyama, Toshio c/o Patent &**
**License Dept.**
**NKK Corp. 1-2, 1-chome, Marunouchi**
**Chiyoda-ku, Tokyo(JP)**
Inventor: **Suenaga, Hiroyoshi c/o Patent &**
**License Dept.**
**NKK Corp. 1-2, 1-chome Marunouchi**
**Chiyoda-ku, Tokyo(JP)**
Inventor: **Okano, Yoko c/o Patent & License**
**Dept. NKK Corp.**
**1-2, 1-chome, Marunouchi**
**Chiyoda-ku, Tokyo(JP)**
Inventor: **Morita, Kenji c/o Patent & License**
**Dept. NKK Corp.**
**1-2, 1-chome, Marunouchi**
**Chiyoda-ku, Tokyo(JP)**
Inventor: **Ohmura, Masanori c/o Patent &**
**License Dept.**
**NKK Corp. 1-2, 1-chome, Marunouchi**
**Chiyoda-ku, Tokyo(JP)**
Inventor: **Ida, Iwao c/o Patent & License Dept.**
**NKK Corp.**
**1-2, 1-chome, Marunouchi**
**Chiyoda-ku, Tokyo(JP)**
Inventor: **Nagashima, Hitoshi c/o Patent &**
**License Dept.**
**NKK Corporation 1-2, 1-chome, Marunouchi**
**Chiyoda-ku, Tokyo(JP)**

(74) Representative: **Sajda, Wolf E., Dipl.-Phys.**
**MEISSNER, BOLTE & PARTNER, Postfach 86**
**06 24, Widenmayerstrasse 48**
**D-81633 München (DE)**

(54) **Magnetic disk substrate of titanium.**

(57) A magnetic disk substrate comprising a main body made of titanium or a titanium allow, and an anodized film formed on the main body. The ratio of the color difference existing on the surface of the anodized film to the voltage applied to the main body to form the anodized film is at least 0.35. The color difference defined in L*A*b* color system as $| L^*_{MAX} - L^*_{MIN} | + | a^*_{MAX} - a^*_{MIN} | + | b^*_{MAX} - b^*_{MIN} |$, where MAX and MIN are the maximum and minimum values L*, a* and b* have.

FIG. 1

EP 0 562 152 A1

The present invention relates to a magnetic disk substrate of titanium used for a magnetic disk capable of a high density recording-reproducing of information.

In recent years, it has been attempted to provide magnetic disks which can record a greater amount of data at a higher density. It is therefore demanded that a disk substrate be provided on which a magnetic film can be formed to have high S/N ratio and to be free of signal errors such as missing pulses.

Hitherto used as materials of magnetic disk substrates are aluminum alloys. Recently, titanium has been tried as material of a magnetic disk substrate, as is disclosed in Published Unexamined Japanese Patent Application No. 52-105804. This is because various magnetic films having properties differing over a broad range can be formed on titanium substrates by means of sputtering, since titanium is more heat-resistant than aluminum alloys, and it is therefore possible to manufacture a magnetic disk the magnetic film of which has improved recording characteristics.

A magnetic disk comprising a titanium substrate and a magnetic film formed thereon makes a considerable number of signal errors (e.g., missing pulses), however. This is a great bar to the use of titanium as material of a magnetic disk substrate.

Accordingly it is the object of this invention to provide a magnetic disk substrate of titanium which helps to provide a magnetic disk which excels in error characteristic, or which hardly generates missing pulses.

According to the present invention, there is provided a magnetic disk substrate comprising: a main body made of titanium or a titanium alloy; and an anodized film formed on the main body, wherein the ratio of the color difference existing on the surface of the anodised film to the voltage applied to the main body to form the anodised film being at least 0.35, the color difference defined in L*A*b* color system as $| L^*_{MAX}-L^*_{MIN} | + | a^*_{MAX}-a^*_{MIN} | + | b^*_{MAX}-b^*_{MIN} |$, where MAX and MIN are the maximum and minimum values L*, a* and b* have.

This invention can be more fully understood from the following detailed description when taken in conjunction with the accompanying drawings, in which:

Fig. 1 is a graph illustrating the relationship between the voltage applied to a main body, thereby forming an anodized film thereon, and the surface color of the anodised film; and

Fig. 2 is a graph representing the relationship between the ratio of the color difference to the anodising voltage, on the one hand, and the number of missing pulses generated by a magnetic disk comprising the substrate according to the invention.

The inventors hereof have recorded data on, and reproduced the data from, various magnetic disks each comprising a titanium substrate and a magnetic film formed thereon, their attempt to provide a magnetic disk which has a titanium substrate and which can yet have improved error characteristic. They evaluated the data-recording/reproducing characteristics of these magnetic disks. They have found that the number of missing pulses on each magnetic disk depends on the surface crystallinity of the magnetic disk.

Based on their finding, the inventors formed an anodized film on a titanium substrate and then formed a magnetic film on the anodized film, thereby manufacturing a magnetic disk. Data was recorded on this magnetic disk and reproduced therefrom at the frequency of 6 MHz, while the disk was being rotated at 3600 rpm. The disk generated no missing pulses. The forming of the anodized film was proven a method which can effec tively prevent missing pulses.

The inventors found, however, that the anodised film could not perfectly prevent missing pulses when the data was recorded on the magnetic disk at higher densities.

Therefore did they started probing the reason why the anodized film failed to prevent missing pulses completely in the case where data had been recorded in higher densities. Then, they found that the number of missing errors generated by the disk depended on the color difference forming the anodized film. Also did they find that the magnetic disk generated no missing pulses when the ratio of the color difference to the anodizing voltage applied to the substrate of the magnetic disk had equal to or less than a predetermined value. The present invention is based on this finding of theirs.

Generally, it is known in anodizing treatment of a titanium member that, the higher the anodizing voltage, the thicker the anodized film, and also that the surface color of the member changes. When the inventors examined the surface of magnetic-disk substrate made of titanium, they noticed that the anodised film differed in color in accordance with the individual titanium crystals.

Such a color difference seems to have resulted from the surface alteration of the titanium substrate, which has been caused by the mirror-polishing (i.e., a mechanical process) conducted before the anodic oxidation. In other words, the color difference indicates the degree of the surface alteration of the titanium substrate.

The altered surface of the titanium substrate has strains and defects. An anodised film, if formed on the altered surface of the substrate, is non-uniform and has defects. A magnetic disk, which comprises a titanium substrate having an altered surface, an anodised film formed on the substrate, and a magnetic film formed on the anodised film, will inevitably generate missing pulses as data is recorded on or reproduced from the magnetic disk.

Obviously, the number of missing pulses the magnetic disk generates depend on the color difference forming the anodised film. The more the color difference is reduced, the less the missing pulses.

The relationship between the color difference and the number of missing pulses generated depends on the anodizing voltage. The higher the anodizing voltage, the greater the color difference, provided the number of missing pulses remaining unchanged. In other words, even if the surface condition of the anodized film is the same, and the number of missing pulses generated is thus the same, the color difference will be great in proportion to the anodising voltage. Therefore, in this invention, the ratio of the color difference to the anodising voltage is used as a parameter of missing pulses thereby to eliminate the influence of the anodising voltage. The ratio is set at 0.35, so that the magnetic disk generates virtually no missing pulses as data is recorded on the disk or reproduced therefrom.

The term "color difference" used herein means one represented by the $L^*a^*b^*$-color system which Commission International de l'Eclairage calls "CIE1976 ($L^*a^*b^*$) Space." This is a system of evaluating a color three-dimensionally, or in three numerical values $L^*$, $a^*$ and $b^*$, where $L^*$ is brightness, $a^*$ and $b^*$ are chromaticity represented hue and chroma. The value $a^*$ is on a red-green axis (red and green being on the positive and negative sides, respectively). The value $b^*$ is on a yellow-blue axis (yellow and blue on the positive and negative sides, respectively), which extends at right angles to the red-green axis. A color difference is defined by $| L^*_{MAX}-L^*_{MIN} | + | a^*_{MAX}-a^*_{MIN} | + | b^*_{MAX}-b^*_{MIN} |$, i.e., the sum of the difference between the maximum and minimum values of $L^*$, the difference between the maximum and minimum values of $a^*$, and the difference between the maximum and minimum values of $b^*$. These maximum and minimum values are those which $L^*$, $a^*$ and $b^*$ have in a view field. Practically, the maximum and minimum values are determined from the values measured by a colorimeter at selected points on a color image of the anodizing film taken by for example a 200-magnification reflecting microscope. These values can be determined by any other known method, since they are substantially the same, by whichever method they are measured.

The main body of the magnetic disk substrate according to the invention can be made of pure titanium or a titanium alloy. Alternatively, it can comprise a titanium or titanium alloy base and a hardened layer formed on the base.

The present invention is specified by the color difference on the surface of its anodized film and the anodising voltage applied to the main body to form the anodised film, not by the conditions under which the main body is mirror-polishing by any known method and surface-treated (e.g., electrolytically etched) by any existing method, before it is subjected to anodic oxidation.

Example

An example of the magnetic disk substrate according to this invention will now be described.

Disks of pure titanium, all having a diameter of 2.5 inches, were mirror-polished and surface-treated. These titanium disks, which had a thickness of 0.89 mm, were subjected anodic oxidation under various conditions, using 1.0 vol% aqueous solution of phosphoric acid used as electrolytic solution, while applying anodizing voltages ranging from 20V to 160V to the titanium disks. As a result, various types of magnetic disk substrates were prepared.

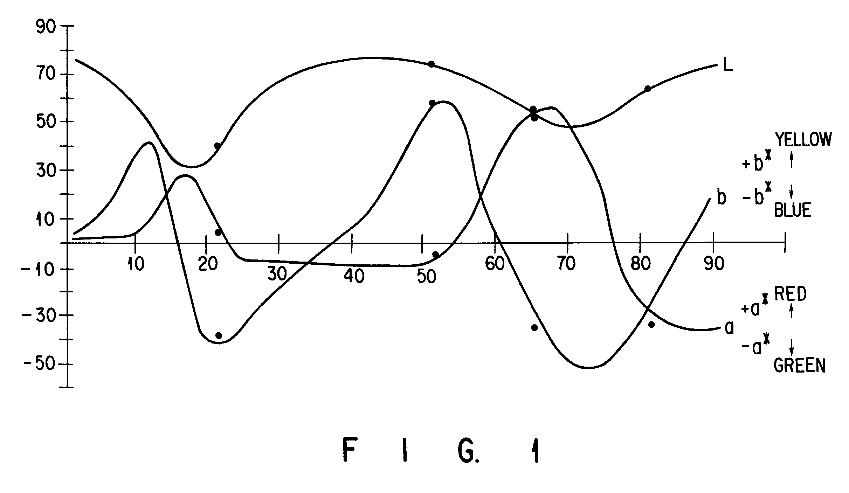

Fig. 1 illustrates the relationship between the voltages applied to the titanium disks and the surface colors of the anodised films formed on the titanium disks. As clearly understood from Fig. 1, the color of each anodized film depended on the anodizing voltage applied to the titanium disk.

The color difference observed on the anodized film of each magnetic disk substrate was determined in the following way. First, a color photograph of the surface of the anodized film was taken by a 200-magnification reflecting microscope. The color photograph was measured by a colorimeter, at 15 points selected at random. Values $L^*$, $a^*$, and $b^*$ at each points were thereby measured. Then, the color difference, i.e., $| L^*_{MAX}-L^*_{MIN} | + | a^*_{MAX}-a^*_{MIN} | + | b^*_{MAX}-b^*_{MIN} |$, was determined, where MAX is the greatest of the 15 values measured at the 15 points, and MIN is the least of the 15 values detected at the 15 points.

The ratio of the color difference ($\Delta$) on the anodised film of each magnetic disk substrate to the anodising voltage (V) applied to the titanium disk, i.e., $\Delta/V$, was as is shown in the following Table 1.

Thereafter, the various titanium substrates, thus prepared, were subjected to sputtering conducted in vacuum of $1 \times 10^{-3}$ Torr, while maintaining the substrates at 250°. A Cr-based underlying film having a thickness of 10 to 100 nm and a Co-system magnetic film (i.e., a Co(84)-Cr(14)-Ta(2) film) having a thickness of 60 nm were thereby formed sequentially on each titanium substrate. Further, a protective carbon film having a thickness of 30 nm and a liquid lubricant layer made of freon were formed sequentially on each titanium substrate. Thus, various magnetic disks were manufactured.

These magnetic disks were tested for their missing-error characteristics. To be more specific, a certifier was used, counting the number of missing pulses each magnetic disk generated. In the certifier, the magnetic disk was driven at 3600 rpm, and data was recorded on the disk and reproduced therefrom at two different frequencies of 6 MHz and 8 MHz, while maintaining the magnetic head floating 0.075 μm off the recording surface of the magnetic disk.

None of the substrate tested generated missing pulses when data was recorded on them and reproduced from them at the frequency of 6 MHz. Hence, the number of missing pulses the substrates generated when data was recorded and reproduced at 8 MHz are shown in Table 1.

## Table 1

| Anodizing Voltage V(v) | Color Difference Δ | Ratio Δ/V | Missing Pluses (One Side) |
|---|---|---|---|
| 20 | 3.89 | 0.19 | 0 |
| 20 | 4.31 | 0.22 | 0 |
| 20 | 4.99 | 0.25 | 0 |
| 20 | 5.81 | 0.29 | 0 |
| 20 | 6.48 | 0.32 | 0 |
| 20 | 6.58 | 0.33 | 0 |
| 20 | 7.15 | 0.36 | 2 |
| 20 | 8.59 | 0.43 | 5 |
| 20 | 9.45 | 0.47 | 4 |
| 20 | 13.01 | 0.65 | 8 |
| 40 | 5.24 | 0.13 | 0 |
| 40 | 6.32 | 0.16 | 0 |
| 40 | 8.12 | 0.20 | 0 |

(continued)

| Anodizing Voltage V(v) | Color Difference Δ | Ratio Δ/V | Missing Pluses (One Side) |
|---|---|---|---|
| 40 | 9.12 | 0.23 | 0 |
| 40 | 12.01 | 0.30 | 0 |
| 40 | 13.55 | 0.34 | 0 |
| 40 | 14.25 | 0.36 | 3 |
| 40 | 18.45 | 0.46 | 5 |
| 40 | 19.48 | 0.49 | 4 |
| 40 | 22.15 | 0.55 | 8 |
| 60 | 6.25 | 0.10 | 0 |
| 60 | 8.45 | 0.14 | 0 |
| 60 | 9.11 | 0.15 | 0 |
| 60 | 11.52 | 0.19 | 0 |
| 60 | 16.14 | 0.27 | 0 |
| 60 | 19.88 | 0.33 | 0 |
| 60 | 23.45 | 0.39 | 2 |
| 60 | 26.11 | 0.44 | 5 |
| 60 | 34.15 | 0.57 | 6 |
| 60 | 38.26 | 0.64 | 8 |
| 80 | 10.36 | 0.13 | 0 |
| 80 | 12.36 | 0.15 | 0 |
| 80 | 16.45 | 0.21 | 0 |
| 80 | 22.15 | 0.28 | 0 |
| 80 | 23.12 | 0.29 | 0 |
| 80 | 26.34 | 0.33 | 0 |
| 80 | 29.00 | 0.36 | 3 |
| 80 | 34.15 | 0.43 | 6 |
| 80 | 39.15 | 0.49 | 8 |
| 80 | 42.22 | 0.53 | 7 |
| 100 | 15.23 | 0.15 | 0 |
| 100 | 19.00 | 0.19 | 0 |
| 100 | 19.99 | 0.20 | 0 |
| 100 | 25.02 | 0.25 | 0 |
| 100 | 27.11 | 0.27 | 0 |

(continued)

| Anodizing Voltage V(v) | Color Difference Δ | Ratio Δ/V | Missing Pluses (One Side) |
|---|---|---|---|
| 100 | 33.26 | 0.33 | 0 |
| 100 | 36.11 | 0.36 | 5 |
| 100 | 37.01 | 0.37 | 8 |
| 100 | 39.45 | 0.39 | 7 |
| 100 | 42.01 | 0.42 | 10 |
| 120 | 24.36 | 0.20 | 0 |
| 120 | 28.46 | 0.24 | 0 |
| 120 | 30.54 | 0.25 | 0 |
| 120 | 36.01 | 0.30 | 0 |
| 120 | 39.12 | 0.33 | 0 |
| 120 | 41.62 | 0.35 | 0 |
| 120 | 42.35 | 0.35 | 5 |
| 120 | 45.02 | 0.38 | 4 |
| 120 | 49.25 | 0.41 | 8 |
| 120 | 55.01 | 0.46 | 11 |
| 140 | 22.01 | 0.16 | 0 |
| 140 | 28.15 | 0.20 | 0 |
| 140 | 33.05 | 0.24 | 0 |
| 140 | 39.45 | 0.28 | 0 |
| 140 | 40.21 | 0.29 | 0 |
| 140 | 46.25 | 0.33 | 0 |
| 140 | 50.23 | 0.36 | 2 |
| 140 | 54.12 | 0.39 | 5 |
| 140 | 55.13 | 0.39 | 7 |
| 140 | 56.89 | 0.41 | 9 |
| 160 | 29.12 | 0.18 | 0 |
| 160 | 32.15 | 0.20 | 0 |
| 160 | 36.13 | 0.23 | 0 |
| 160 | 44.23 | 0.28 | 0 |
| 160 | 55.12 | 0.34 | 0 |
| 160 | 59.12 | 0.37 | 0 |
| 160 | 60.12 | 0.38 | 6 |

(continued)

| Anodizing Voltage V(v) | Color Difference Δ | Ratio Δ/V | Missing Pluses (One Side) |
|---|---|---|---|
| 160 | 64.23 | 0.40 | 8 |
| 160 | 66.45 | 0.42 | 11 |
| 160 | 68.12 | 0.43 | 13 |

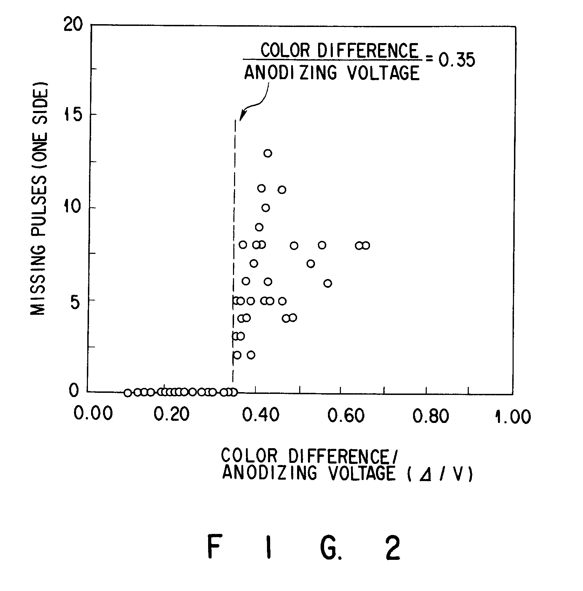

Fig. 2 represents the relationship between the ratio of the color difference (Δ) to the anodising voltage (V), on the one hand, and the number of missing pulses generated by each magnetic disk, on the other hand.

As is evident from Table 1 and Fig. 2, any magnetic disk generated no missing pulses, provided that the ratio Δ/V was 0.35 or less, no matter whichever method had been employed to mirror-polish and surface-treat the titanium disk prior to the anodic oxidation. By contrast, any magnetic disk, wherein the ratio Δ/V exceeded 0.35, did generated missing pulses. Thus, any magnetic disk, in which the ratio Δ/V is 0.35 or less, generated no missing pulses even when data was recorded on it or reproduced from it at the higher frequency of 8 MHz.

As can be understood from the above, the present invention can provide a substrate which helps to provide a magnetic disk which excels in error characteristic, or which hardly generates missing pulses.

## Claims

1. A magnetic disk substrate comprising:

   a main body made of titanium or a titanium alloy; and

   an anodised film formed on the main body,

   wherein the ratio of the color difference existing on the surface of the anodised film to the voltage applied to the main body to form the anodized film is at least 0.35, said color difference defined in $L^*A^*b^*$ color system as $| L^*_{MAX} - L^*_{MIN} | + | a^*_{MAX} - a^*_{MIN} | + | b^*_{MAX} - b^*_{MIN} |$, where MAX and MIN are the maximum and minimum values $L^*$, $a^*$ and $b^*$ have.

F I G. 1

EP 0 562 152 A1

$$\frac{\text{COLOR DIFFERENCE}}{\text{ANODIZING VOLTAGE}} = 0.35$$

F I G. 2

European Patent Office

**EUROPEAN SEARCH REPORT**

Application Number

EP 92 10 7167

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | DATABASE WPI<br>Week 7742,<br>Derwent Publications Ltd., London, GB;<br>AN 77-74746Y<br>& JP-A-52 105 804 (FUJITSU LTD; NIPPON TELEGRAPH AND CO) 5 September 1977<br>* abstract * | 1 | G11B5/64 |
| | ----- | | |
| | | | **TECHNICAL FIELDS SEARCHED (Int. Cl.5)**<br><br>G11B |

The present search report has been drawn up for all claims

| Place of search | Date of completion of the search | Examiner |
|---|---|---|
| THE HAGUE | 14 DECEMBER 1992 | KLOCKE S. |